# EUROPÄISCHE PATENTANMELDUNG

(11) **EP 3 804 958 A1**
(43) Veröffentlichungstag der Anmeldung: **14.04.2021**
(21) Anmeldenummer: 20200376.0
(22) Anmeldetag: 06.10.2020
(51) Int. Cl.: B29C 49/78, B29C 49/12, B29C 49/46

(54) **VERFAHREN ZUM BETREIBEN EINER BEHÄLTNISBEHANDLUNGSANLAGE UND BEHÄLTNISBEHANDLUNGSANLAGE MIT OPTIMIERTEN PARAMETERN**

(30) Priorität: 08.10.2019 DE 102019126947
(71) Anmelder: Krones AG, 93073 Neutraubling (DE)
(72) Erfinder: Obermeier, Martin, 93073 Neutraubling (DE); Philipp, Thomas, 93073 Neutraubling (DE); Raza, Dennis, 93073 Neutraubling (DE); Vogler, Daniel, 93073 Neutraubling (DE); Haller, Markus, 93073 Neutraubling (DE)
(74) Vertreter: Bittner, Bernhard

(57) **Zusammenfassung**

Verfahren zum Betreiben einer Behältnisbehandlungsanlage (1), wobei eine Vielzahl von Parametern (P₁, P₂, P₃, ... Pₘ) der Behältnisbehandlungsanlage (1), die für die Behandlung von Behältnissen (10) in der Behältnisbehandlungsanlage (1) charakteristisch sind, variabel sind und wobei die Parameter (P₁, P₂, P₃, ... Pₘ) jeweils mit mindestens einem für die zu behandelnden Behältnisse (10) charakteristischen Wert (W) verknüpft sind, wobei für jeden Parameter (P₁, P₂, P₃, ... Pₘ) eine Vielzahl von Referenz-Parameterwerten (p₁₁, p₁₂, p₁₃... p₁ₙ, ... pₘ₁, pₘ₂, pₘ₃, ... pₘₙ) in einer Speichereinrichtung (2) gespeichert sind, wobei an einer Benutzerschnittstelle (4) mindestens ein für die zu behandelnden Behältnisse (10) charakteristischer Wert (W) eingegeben wird und auf Basis dieser Eingabe und den gespeicherten Referenz-Parameterwerten (p₁₁, p₁₂, p₁₃... p₁ₙ, ... pₘ₁, pₘ₂, pₘ₃, ... pₘₙ) eine Kombination aus Parameterwerten (p₁ₓ, p₂ₓ, p₃ₓ, ... pₘₓ) für die Parameter (P₁, P₂, P₃, ... Pₘ) berechnet wird.

## Beschreibung

Die vorliegende Erfindung betrifft ein Verfahren zum Betreiben einer Behältnisbehandlungsanlage und eine Behältnisbehandlungsanlage gemäß den Oberbegriffen der unabhängigen Ansprüche 1 und 10. Derartige Behältnisbehandlungsanlagen sind aus dem Stand der Technik seit langem bekannt. Unter den Begriff der Behältnisbehandlungsanlage fallen dabei eine Vielzahl von unterschiedlichen Anlagen, wie beispielsweise Heizanlagen, welche Vorformlinge erhitzen, Blasformmaschinen, welche Kunststoffvorformlinge in Kunststoffbehältnisse umformen, Etikettieraggregate, Füllmaschinen, Sterilisationseinheiten und dergleichen. Auch eine Kombination mehrerer dieser Anlagen fällt unter den Begriff der Behältnisbehandlungsanlage.

Bei den Behältnissen kann es sich um Vorformlinge, Flaschen, Dosen, KEGS, Spritzen, Pouches oder dergleichen handeln. Diese können aus verschiedenen Materialien, wie beispielsweise Kunststoff, Glas, Metall, etc. bestehen.

Besonders bevorzugt findet die Erfindung bei Behältnisbehandlungsanlagen Anwendung, bei denen zumindest auch Kunststoffvorformlinge erwärmt und anschließend in Kunststoffbehältnisse wie z. B. Flaschen umgeformt werden.

Bei der Behandlung von Behältnissen in einer Behältnisbehandlungsanlage existiert eine Vielzahl an variablen Parametern, die für die Behandlung charakteristisch sind. Unter dem Begriff variabel ist dabei zu verstehen, dass sich diese Parameter grundsätzlich ändern können, also nicht statisch sein müssen. Der Begriff "variabel" umfasst dabei sowohl Parameter, die unmittelbar regulierbar sind, (wie beispielsweise eine Heiztemperatur eines Heizstrahlers) als auch solche, die nicht bzw. nur mit sehr hohem Aufwand von außen beeinflussbar sind (wie z. B. eine Umgebungstemperatur, Luftfeuchtigkeit in der Produktionshalle o. ä.).

Diese Parameter sind jeweils mit mindestens einem für die zu behandelnden Behältnisse charakteristischen Wert verknüpft. Bei dem für die zu behandelnden Behältnisse charakteristischen Wert kann es sich einerseits um ein zu erreichendes Ergebnis eines fertig behandelten Behältnisses handeln, beispielsweise um eine Wanddicke, die das fertige Behältnis aufweisen soll. Es kann sich bei dem charakteristischen Wert jedoch auch um einen Wert handeln, den das zu behandelnde Behältnis vor der Behandlung aufweist, beispielsweise eine Wanddicke des Kunststoffvorformlings vor einem Umformungsvorgang.

Eine "Verknüpfung" zwischen den Parametern und dem charakteristischen Wert der Behältnisse besteht insbesondere deshalb, weil die Parameter den charakteristischen Wert der Behältnisse beeinflussen können, bzw. der charakteristische Wert beeinflusst, welche Parameter erforderlich sind. So ist z. B. von der Wanddicke eines Kunststoffvorformlings die erforderliche Heiztemperatur eines Heizstrahlers abhängig, bzw. von der Heiztemperatur eines Heizstrahlers ist die Wanddicke des umgeformten Kunststoffbehältnisses abhängig.

Im Stand der Technik erfolgt eine Regulierung der Behältnisbehandlungsanlagen über eine Regulierung der Parameter. Dies bringt mehrere Nachteile mit sich. Zum einen ist ein Großteil der Parameter statisch eingestellt, so dass auf bestimmte Schwankungen im Prozess der Nutzer selbst reagieren muss. Dies führt zu einer geringeren Prozessstabilität und dem Erfordernis regelmäßiger Eingriffe eines Nutzers bei Prozessabweichungen.

Darüber hinaus bestehen angesichts der Vielzahl an Parametern im Allgemeinen mehrere Freiheitsgrade bei der Parametrierung. Dies bedeutet z. B., dass dasselbe Ergebnis durch viele unterschiedliche Parameterkombinationen erreicht werden kann. Dabei ist es möglich, dass manche dieser Parameterkombination unter verschiedenen Gesichtspunkten als "besser" angesehen werden, z. B. weil sie zu einem niedrigeren Energieverbrauch führen, zu einer erhöhten Prozessstabilität, einer längeren Lebensdauer (einzelner) Geräte, o. ä. Aufgrund der Vielzahl an Parametern steht der Nutzer vor einem sehr komplexen Problem bei der Auswahl an geeigneten Parametern, dass er möglicherweise nicht optimal und/oder nur mit viel Erfahrung lösen kann.

Hinzu kommt, dass der Nutzer Behältnisse mit unterschiedlichen charakteristischen Werten behandeln möchte. Im Stand der Technik ist es derzeit üblich, dass z. B. für jede Sorte an Kunststoffvorformlingen ein eigenes "Rezept" mit geeigneten Parametern für den Heizprozess abgespeichert wird. Möchte der Nutzer nun eine neue Sorte an Kunststoffvorformlingen behandeln, muss ein neues "Rezept" erstellt werden. Derartige Einstellungen erfolgen derzeit manuell durch Prozessspezialisten und sind dementsprechend nur personalabhängig und mit Dienstreiseaufwänden zum Kundenstandort durchführbar. Dies führt wiederum zu Verzögerungen bei der Inbetriebnahme neuer Sorten sowohl beim Kunden als auch im Werk. Nach der Übergabe an den Kunden werden ggf. auch von Kundenmitarbeitern ungeeignete Heizprozesseinstellungen durchgeführt, was zu einem erhöhten Verschleiß und damit ggf. einer Reklamation (Qualitätskosten) führt.

Der Erfindung liegt daher die Aufgabe zugrunde, eine Vorrichtung und ein Verfahren zur Verfügung zu stellen, durch die die genannten Nachteile vermieden werden.

Bei einem erfindungsgemäßen Verfahren zum Betreiben einer Behältnisbehandlungsanlage sind eine Vielzahl von Parametern (P₁, P₂, P₃, ... Pₘ) der Behältnisbehandlungsanlage, die für die Behandlung von Behältnissen in der Behältnisbehandlungsanlage charakteristisch sind, variabel. Die Parameter (P₁, P₂, P₃, ... Pₘ) sind jeweils mit mindestens einem für die zu behandelnden Behältnisse charakteristischen Wert (W) verknüpft. Für jeden Parameter (P₁, P2, P₃, ... Pm) ist eine Vielzahl von Referenz-Parameterwerten (p₁₁, p₁₂, p₁₃,... p₁ₙ, ... pₘ₁, pₘ₂, pₘ₃, ... pₘₙ) in einer Speichereinrichtung gespeichert.

Erfindungsgemäß wird an einer Benutzerschnittstelle mindestens ein für die zu behandelnden Behältnisse charakteristischer Wert (W) eingegeben und auf Basis dieser Eingabe und den gespeicherten Referenz-Parameterwerten (p₁₁, p₁₂, p₁₃,... p₁ₙ, ... pₘ₁, pₘ₂, pₘ₃,... pₘₙ) wird eine Kombination aus Parameterwerten für wenigstens zwei der Parameter berechnet.

Somit wird an der Benutzerschnittstelle, anders als gewöhnlich im Stand der Technik, nicht der Parameter einer technischen Stellgröße (wie z. B. eine Heiztemperatur eines Heizstrahlers) eingegeben, sondern ein für die zu behandelnden Behältnisse charakteristischer Wert (also z. B. ein gewünschtes Ergebnis wie die Flaschenform, Materialverteilung, etc. oder z. B. Merkmale des Kunststoffvorformlings).

Die Parameter sind bevorzugt innerhalb einer vorgegebenen Grenze variabel. Besonders bevorzugt sind auch die Grenzen variabel.
Zur Veranschaulichung wird im Folgenden ein Beispiel beschrieben, bei dem die Behältnisbehandlungsanlage eine Heizeinrichtung mit mehreren Heizstrahlern und eine der Heizeinrichtung nachgeschaltene Umformungseinrichtung zum Umformen von Kunststoffvorformlingen in Kunststoffbehältnisse aufweist. Bei der Umformungseinrichtung kann es sich beispielsweise um eine Streckblasmaschine handeln. Es ist jedoch auch denkbar, dass die Expansion der Kunststoffvorformlinge mit einem flüssigen Medium und insbesondere bereits mit dem flüssigen Füllmedium erfolgt.

Als Beispiele für die Vielzahl von Parametern werden mit P₁ ein Energieverbrauch der Gesamtanlage, als P₂ eine Heiztemperatur eines bestimmten Heizstrahlers, als P₃ ein Abstand des Heizstrahlers zum Kunststoffvorformling, als P₄ eine Heizdauer und als P₅ eine Transportgeschwindigkeit der Kunststoffvorformlinge von der Heizeinrichtung zur Umformungseinrichtung bezeichnet. Es wird darauf hingewiesen, dass es sich hierbei lediglich um ein mögliches Beispiel handelt, das für die beschriebene Erfindung nicht einschränkend sein soll. Zusätzlich oder stattdessen kann es sich bei den Parametern beispielsweise auch um eine andere (Transport-)Geschwindigkeit, (elektrische) Stromkennwerte, Spannungskennwerte (wie etwa eine Netzspannung), Arbeitskennwerte (wie eine Motorarbeit oder verbrauchte Leistungen der Maschinen), Druckkennwerte (z. B. ein Einfülldruck, ein Vorblasdruck, ein Fertigblasdruck, ein Druck innerhalb eines Behältnisses oder dergleichen), eine Reckstangenbewegung, Temperaturkennwerte (wie eine Hallentemperatur, eine Füllguttemperatur, eine Motortemperatur und/oder eine Maschinentemperatur), Volumenstromkennwerte (die z. B. den Durchfluss von Luft, Wasser, Wärme, Öl, Chemikalien und/oder eines Produkts kennzeichnen), Massenstromkennwerte (etwa den Durchfluss von Rohmaterialien wie Weizen), Kraftwerte (wie beispielsweise von Schubkräften) Drehmomentkennwerte, Impulskennwerte, Leistungskennwerte (etwa bezüglich einer Maschinenleistung), Stückzahlkennwerte, Beleuchtungsstärke o. ä. handeln.

Als für die zu behandelnden Behältnisse charakteristischen Wert wird in diesem Beispiel eine Wanddicke des fertig geformten Kunststoffbehältnisses auf der Höhe des Behältnisses, auf der der ursprüngliche Kunststoffvorformling mit dem bestimmten Heizstrahler erwärmt wurde, bezeichnet.

Die Parameter P₁-P₅ sind mit diesem Wert W verknüpft, da die Wanddicke des fertig geformten Kunststoffbehältnisses mit der Temperatur des Kunststoffvorformlings während des Blasvorgangs korreliert. Ist ein Kunststoffvorformling an einer bestimmten Stelle heißer, wird die Wanddicke des Kunststoffbehältnisses an dieser Stelle dünner. Die Temperatur des Kunststoffvorformlings während des Blasvorgangs kann wiederum entweder über die Heiztemperatur des mit dieser Stelle korrespondierenden Heizstrahlers reguliert werden, über die Heizdauer, über den Abstand des Heizstrahlers zum Kunststoffvorformling oder über die Transportgeschwindigkeit des erwärmten Kunststoffvorformlings zur Umformungsstation. Je länger der Kunststoffvorformling transportiert wird, desto stärker kann er auf diesem Transportweg wieder abkühlen. Der Energieverbrauch der Gesamtanlage ist von der Einstellung dieser Parameter (und zahlreichen weiteren Faktoren) abhängig. In jedem Fall ist der Energieverbrauch der Gesamtanlage zur Herstellung eines Kunststoffbehältnisses mit der gewünschten Wanddicke (für bestimmte Parameter P₂-P₅) mit dem Wert W verknüpfbar.

Dabei ist es auch möglich, dass Parameter untereinander verknüpft sind. So beeinflusst eine Heiztemperatur des Heizstrahlers beispielsweise den Energieverbrauch der Anlage. Die Heiztemperatur kann sich jedoch auch wiederum auf die Lebensdauer des Heizstrahlers auswirken.

Referenz-Parameterwerte können vorteilhaft aufgrund von Messungen gewonnen worden sein. Vorteilhaft können die Referenz-Parameterwerte auch aufgrund von theoretischen Berechnungen gewonnen worden sein. Es ist insbesondere auch denkbar, dass ein Teil der Referenz-Parameterwerte durch Messungen und ein Teil der Referenz-Parameterwerte durch Berechnungen erlangt wurden.

Vorteilhaft ist jeweils eine Kombination (p₁ₓ, p₂ₓ, p₃ₓ, ... pₘₓ) mit einem mit dieser Kombination verknüpften charakteristischen Wert wₓ abgespeichert. Vorteilhaft sind jeweils "vollständige" Kombinationen abgespeichert, d. h. bevorzugt ist einem charakteristischen Wert wₓ für jeden Parameter P₁-Pₘ ein Wert zugewiesen. Es ist jedoch auch denkbar, dass nur einige Parameter abgespeichert sind. Insbesondere kann für einzelne Parametern auch eine unterschiedliche Anzahl an Referenz-Parameterwerten abgespeichert sein.

Im konkreten Beispiel: Für jeden der Parameter P₁-P₅ ist eine Vielzahl von Referenz-Parameterwerten gespeichert. Vorteilhaft können z. B. Messergebnisse gespeichert sein. Vorteilhaft kann somit gespeichert sein, dass eine Temperatur p₂₁, ein Abstand p₃₁, eine Heizdauer p₄₁ und eine Transportgeschwindigkeit p₅₁ zu einem Kunststoffbehältnis mit der Wanddicke w₁ geführt hat und die Herstellung dieses Kunststoffbehältnisses einen Energiebedarf von p₁₁ hatte. Der erste Index der Referenz-Parameterwerte bezieht sich hierbei auf den Parameter, zu dem der jeweilige Referenz-Parameterwert gehört (d. h. Parameterwerte p₁ₓ beziehen sich in diesem Beispiel immer auf einen Energiebedarf). Der zweite Index dient der Unterscheidung der verschiedenen Referenz-Parameterwerte des jeweiligen Parameters. Der Index "x" ist dabei als Platzhalter für eine beliebige Zahl anzusehen.

Vorteilhaft ist ebenso gespeichert, dass eine Temperatur p₂₂, ein Abstand p₃₂, eine Heizdauer p₄₂ und eine Transportgeschwindigkeit p₅₂ zu einem Kunststoffbehältnis mit der Wanddicke w₂ geführt hat und die Herstellung dieses Kunststoffbehältnisses einen Energiebedarf von p₁₂ hatte, etc. Die Indizes dienen hier ausschließlich der Kennzeichnung. Sie sollen nicht ausdrücken, dass die jeweiligen Referenz-Parameterwerte verschiedene Größen haben müssen. So kann die Wanddicke beispielsweise bei w₁ genauso groß sein wie bei w₂, bzw. der Energiebedarf p₁₁ könnte genauso groß sein wie der Energiebedarf p₁₂.

Im gewählten Beispiel wird an einer Benutzerschnittstelle als ein für die zu behandelnden Behältnisse charakteristischer Wert eine gewünschte Wanddicke wₓ eingegeben. Auf Basis dieser Eingabe des Wertes wₓ und auf Basis der gespeicherten Referenz-Parameterwerten (p₁₁, p₁₂, p₁₃... p₁ₙ,... p₅₁, p₅₂, p₅₃... p₅ₙ) wird eine Kombination aus Parameterwerten für wenigstens zwei der Parameter P₁-P₅ berechnet, d. h. es werden mindestens zwei Parameterwerte (p₁ₓ, p₂ₓ, p₃ₓ, p₄ₓ oder p₅ₓ) bestimmt.

Besonders bevorzugt wird für jeden Parameter (P₁, P₂, P₃, ... Pₘ) ein Parameterwert (p₁ₓ, p₂ₓ, p₃ₓ, ... pₘₓ) berechnet, also eine "vollständige" Kombination an Parameterwerten bestimmt. Im genannten Beispiel würde dies bedeuten, dass bevorzugt die Parameterwerte p₁ₓ, p₂ₓ, p₃ₓ, p₄ₓ und p₅ₓ berechnet werden.

In einem vorteilhaften Verfahren können die berechneten Parameterwerte (p₁ₓ, p₂ₓ, p₃ₓ, ... p_{yx}) mit gespeicherten Referenz-Parameterwerten übereinstimmen. Besonders bevorzugt können die berechneten Parameterwerte (p₁ₓ, p₂ₓ, p₃ₓ, ... p_{yx}) jedoch auch andere Werte annehmen, die mit keinen gespeicherten Referenz-Parameterwerten übereinstimmen. Insbesondere ist es vorteilhaft möglich, dass einzelne Parameterwerte mit gespeicherten Referenz-Parameterwerten übereinstimmen, andere berechnete Parameterwerte jedoch Werte annehmen, die nicht gespeichert sind.

Im Beispiel: Existieren für den Parameter P₄ (Heizdauer) beispielsweise nur die Referenz-Parameterwerte für p₄₁ = 5 s, p₄₂ = 7 s, p₄₃ = 9 s und p₄₄ = 10 s, kommen als berechneter Parameterwert p₄ₓ abgesehen von diesen Werten auch Werte wie 4 s, 8 s, 9,5 s, 12 s etc. in Betracht. Die berechneten Parameterwerte sind somit nicht auf Werte limitiert, die bereits als Referenz-Parameterwerte abgespeichert sind.

Bei einem bevorzugten Verfahren wird mindestens ein Parameter (P₁, P₂, P₃, ... Pₘ) in Abhängigkeit von der erfolgten Berechnung reguliert.

In dem genannten Beispiel kann z. B. eine Änderung der Heizleistung eines Heizstrahlers, ein Zu- oder Abschalten eines Heizstrahlers, eine Änderung der Position eines Heizstrahlers, eine Änderung einer Transportgeschwindigkeit, oder eine Änderung einer Behandlungsdauer erfolgen. Andere Beispiele wären z. B. die Änderung eines Blasdrucks, die Änderung eines Einfülldrucks, die Änderung einer Einfüllmenge, etc.

Vorteilhaft erfolgt aufgrund der berechneten Parameter die Ausgabe einer Information. Eine solche Information könnte beispielsweise in der Anzeige der berechneten Parameterwerte, im Aufleuchten einer Signalleuchte o. ä. liegen. Auch die Ausgabe einer automatischen Regulierungsanweisung an die Behältnisbehandlungsanlage ist als die Ausgabe einer Information zu verstehen. Bei einer möglichen Ausführungsform kann aufgrund der ausgegebenen Information eine Regulierung der Parameter erfolgen.

Vorteilhaft erfolgt die Regulierung des Parameters dabei insbesondere automatisch. Vorteilhaft ist für die Regulierung keine weitere Benutzereingabe erforderlich.

Bei einem vorteilhaften Verfahren wird während der Behandlung der Behältnisse mindestens ein Parameter-Istwert (p_{y_ist}) eines Parameters (P_{y}) gemessen. Bevorzugt wird der Parameter-Istwert (p_{y_ist}) bei der Berechnung der Kombination aus Parameterwerten berücksichtigt.

Bei einem weiter bevorzugten Verfahren wird die Kombination aus Parameterwerten (p₁ₓ, p₂ₓ, p₃ₓ... pₘₓ) auf Basis des an der Benutzerschnittstelle eingegebenen charakteristischen Wertes (W) unter Berücksichtigung des Parameter-Istwerts (p_{y_ist}) als fest vorgegebener Parameterwert berechnet.

Auf diese Weise ist in Abhängigkeit von einem gemessenen Parameter-Istwert eine entsprechende Regulierung während des Anlagenbetriebs möglich. Hierdurch ist ein flexibles Reagieren auf Prozessschwankungen möglich.

Vorteilhaft wird der Parameter-Istwert kontinuierlich während des Anlagenbetriebs gemessen. Bevorzugt kann der Parameter-Istwert auch in bestimmten, insbesondere regelmäßigen Abständen während des Anlagenbetriebs gemessen werden.

Bevorzugt erfolgt eine (Neu-)Berechnung der Kombination aus Parameterwerten unter Berücksichtigung des Parameter-Istwert (p_{y_ist}) kontinuierlich, in bestimmten Abständen und/oder bei Überschreiten eines bestimmten Schwellenwerts während des Anlagenbetriebs.

Bei einem vorteilhaften Verfahren erfolgt eine Regulierung mindestens eines Parameters in Abhängigkeit einer solchen (Neu-)Berechnung. Vorteilhaft kann eine Regulierung kontinuierlich, in bestimmten Abständen und/oder bei Überschreitung eines vorgegebenen Schwellenwerts erfolgen.

Beispielsweise kann der Parameter P₆ ein Parameter für die Umgebungstemperatur sein. Während des Anlagenbetriebs kann kontinuierlich oder in regelmäßigen Abständen die Umgebungstemperatur gemessen werden (p_{e_ist}). In Abhängigkeit von dem vom Benutzer eingegeben charakteristischen Wert W (beispielsweise die gewünschte Wanddicke des fertigen Behältnisses) wird eine Kombination aus Parameterwerten berechnet. Bei dieser Berechnung wird der gemessene Wert p_{e_ist} als fest vorgegebener Wert, der nicht verändert werden kann, berücksichtigt. Bei der Berechnung wird somit eine Kombination aus Parameterwerten gesucht, wie bei dieser (neuen) Umgebungstemperatur ein Behältnis mit der entsprechenden Wanddicke produziert werden kann (z. B. Berechnung welche (neue) Heizleistung die Heizstrahler benötigen, welchen (neuen) Abstand sie zum Kunststoffvorformling haben sollen etc.).

Bei einem bevorzugten Verfahren ist ein Einregeln der Anlage möglich. Dies ist insbesondere bei einer Inbetriebnahme der Anlage vorteilhaft. Hierzu können vorteilhaft Behältnisse zuerst mit voreingestellten Parametern behandelt werden. Die Prozessparameter werden nunmehr verändert und es werden anschließend erneut Behältnisse behandelt. Auf diese Weise werden mehrere Behältnisse mit leicht variierten Parametern behandelt. Die behandelten Behältnisse werden jeweils mit einem Soll-Ergebnis verglichen. Es wird dabei darauf hingewiesen, dass bevorzugt das Einregeln der Maschine iterativ erfolgt, das heißt dass eine Vielzahl von Behältnissen behandelt wird, um schließlich das gewünschte Soll-Ergebnis zu erreichen. Bevorzugt werden dabei insbesondere durch einen Algorithmus die Prozessparameter so lange angepasst, bis ein Sollzustand erreicht ist.

Erhöht sich beispielsweise die Umgebungstemperatur p_{e_ist}, wird bei einer Neuberechnung der Kombination aus Parameterwerten beispielsweise für den Parameter P₂ (Heiztemperatur eines Heizstrahlers) ein niedrigerer Wert berechnet. Bevorzugt wird die neue Kombination aus Parameterwerten entweder kontinuierlich oder in bestimmten Zeitabständen und/oder bei Überschreiten eines bestimmten Schwellenwertes berechnet. So ist es beispielsweise möglich, dass eine neue Kombination aus Parameterwerten in Abständen von 10 Minuten berechnet wird, zusätzlich jedoch auch dann, wenn sich die Umgebungstemperatur seit der letzten Messung um mehr als 0,2 °C geändert hat.

Bei einem vorteilhaften Verfahren wird zur Berechnung der Kombination aus Parametern eine KI (künstliche Intelligenz) eingesetzt. Besonders bevorzugt wird ein Künstliches Neuronales Netz eingesetzt. Bevorzugt wird ein Künstliches Neuronales Netz eingesetzt, das mittels überwachtem Lernen trainiert wurde, um dem System die gewünschten Anpassungen bei Prozessschwankungen anzulernen. Hierbei wird ein konkretes Ergebnis für die unterschiedlichen Eingabemöglichkeiten vorgegeben. Anhand des ständigen Vergleichs zwischen Soll- und Ist-Ergebnis lernt das Netz die Neuronen passend zu verknüpfen. Es wäre jedoch auch möglich, das Künstliche Neuronale Netz mittels unbeaufsichtigtem Lernen, bestärkendem Lernen oder stochastischem Lernen zu trainieren.

Bei einem weiter bevorzugten Verfahren ist bei der Berechnung der Kombination aus Parameterwerten (p₁ₓ, p₂ₓ, p₃ₓ, ... pₘₓ) eine Optimierung für mindestens einen Parameter (P₁, P₂, P₃, ... Pₘ) möglich.

Um den charakteristischen Wert W zu erreichen, können grundsätzlich mehrere Parameterwert-Kombinationen möglich sein. In Bezug auf mindestens einen Parameter soll zusätzlich eine Optimierung erfolgen, so dass aus den grundsätzlich zur Verfügung stehenden Kombinationen die Kombination ausgewählt wird, bei der mindestens ein Parameter "optimiert" ist. Unter "optimiert" kann hierbei z. B. verstanden werden, dass der zu dem Parameter gehörende Parameterwert möglichst niedrig oder möglichst hoch sein soll. Es kann aber auch darunter verstanden werden, dass der Parameterwert in einer bestimmten Größenordnung liegt.

Im bereits beschriebenen Beispiel, in dem der Parameter P₁ den Energieverbrauch darstellt, kann beispielsweise eine besonders energiesparende Einstellung gesucht werden, mit der der charakteristische Wert W dennoch erreicht werden kann. Um die gewünschte Wanddicke bei dem fertigen Behältnis zu erreichen, muss der Kunststoffvorformling beim Blasformen an dieser Stelle eine bestimmte Temperatur aufweisen. Um eine höhere Temperatur zu erreichen, kann entweder die Heizleistung eines Heizstrahlers erhöht werden (also P₂ erhöht werden), der Abstand zwischen Heizstrahler und Kunststoffvorformling erniedrigt werden (also P₃ verkleinert werden), die Heizdauer (P₄) erhöht werden und/oder die Transportgeschwindigkeit (P₅) zwischen Heizeinrichtung und Umformeinrichtung erhöht werden, damit die Kunststoffvorformlinge auf dem Weg weniger Zeit zum Abkühlen haben. Bei einem vorteilhaften Verfahren erfolgt eine Berechnung, bei welcher Kombination von Parametern (P₁, P₂, P₃, P₄, P₅) zwar W erreicht wird, P₁ aber möglichst niedrig ist.

Auch kann die Auswahl der Parameter von einer Wertung des Benutzers abhängen, etwa ob ein besonders niedriger Energieverbrauch präferiert werden soll oder etwa die Lebensdauer von Maschinenelementen.

Bevorzugt erfolgt die Optimierung mittels kombinatorischer Optimierung. Besonders bevorzugt kommen dabei heuristische Methoden zum Einsatz. Es wird daher insbesondere vorgeschlagen, für ein konkretes Optimierungsproblem eine Heuristik zu entwickeln, mit welcher eine optimale Lösung gefunden werden kann.

Dies hat den Vorteil, dass die Prozessparameter immer optimal (nach den Optimierungszielen) eingestellt werden kann und auch unerfahrene Nutzer einen optimalen Prozess einstellen können. Im Allgemeinen führt dies auch zu einer Reduzierung des Energieverbrauchs, einer Erhöhung der Lebensdauer der einzelnen Bauteile (z. B. der Heizstrahler) und einer Erhöhung der Prozessstabilität.

Bei einem vorteilhaften Verfahren ist für mindestens einen Parameter (P₁, P₂, P₃, ... Pₘ) eine Ober- und/oder Untergrenze für einen zu berechnenden Parameterwert (p₁ₓ, p₂ₓ, p₃ₓ, ... pₘₓ) vorgegeben. Bei einem bevorzugten Verfahren können Werte der Ober- und/oder Untergrenzen in der Speichereinrichtung hinterlegt sein und/oder über die Benutzerschnittstelle eingegeben werden. Dabei ist insbesondere auch denkbar, dass in der Speichereinrichtung hinterlegte Werte über die Benutzerschnittstelle geändert werden können. Beispielsweise ist denkbar, dass voreingestellte Grenzwerte über die Benutzerschnittstelle weiter eingeschränkt werden können.

Beispielsweise kann für die Heiztemperatur des Heizstrahlers (P₂) die vom konkreten Heizstrahlermodell tatsächlich erreichbare Temperatur als Ober-/Untergrenze eingegeben werden. Dabei ist es bevorzugt auch möglich, eine solche Grenze manuell über die Benutzerschnittstelle zu ändern. Dies kann z. B. vorteilhaft sein, wenn Kunststoffvorformlinge verwendet werden, bei denen eine bestimmte Temperatur nicht überschritten werden soll, obwohl die Heizstrahler hierzu grundsätzlich in der Lage wären.

Bei einem weiter bevorzugten Verfahren wird für den charakteristischen Wert eine Fehlertoleranz vorgegeben. In einem solchen Verfahren ist es somit auch möglich, dass Kombinationen von Parameterwerten berechnet werden, die den charakteristischen Wert W nicht exakt, sondern nur im Rahmen eines gewissen Fehlers treffen.

Im Beispielsfall, bei dem der charakteristische Wert W für die zu erreichende Wanddicke eines fertigen Behältnisses steht, kann beispielsweise vorgegeben werden, dass bei der Berechnung einer möglichen/optimalen Parameterkombination nicht nur solche Parameterkombinationen berücksichtigt werden sollen, bei denen der Wert W exakt erreicht wird, sondern auch solche Kombinationen, bei denen die Wanddicke um einen bestimmten Betrag vom charakteristischen Wert abweicht. Hierbei kann beispielsweise eine Fuzzy-Logik zum Einsatz kommen.

Auf diese Weise kann erreicht werden, dass unter Umständen bei nur einer kleinen Abweichung vom erwünschten Ergebnis (im Bereich der vorgegebenen Fehlertoleranz) ein deutlich "optimierteres" Ergebnis gefunden wird. Beispielsweise könnte auf diese Weise herausgefunden werden, wenn die Herstellung eines Behältnisses, dessen Wanddicke vom eigentlich gewünschten Ergebnis nur um wenige Prozent abweicht, sehr viel weniger Energie benötigt.

Für ein vorteilhaftes Verfahren kann die Fehlertoleranz entweder bereits in der Speichereinrichtung hinterlegt worden sein und/oder die Fehlertoleranz kann über die Benutzerschnittstelle eingebbar sein.

In einem weiter bevorzugten Verfahren wird auf Basis der gespeicherten Referenz-Parameterwerten (p₁₁, p₁₂, p₁₃... p₁ₙ, ... pₘ₁, pₘ₂, pₘ₃,... pₘₙ) eine Kombination aus Parameterwerten (p₁ₓ, p₂ₓ, p₃ₓ, ... pₘₓ) berechnet, mit der der charakteristische Wert (W) möglichst genau getroffen wird.

Dies ist insbesondere dann vorteilhaft, wenn für den charakteristischen Wert W noch keinerlei Datenmaterial vorliegt, beispielsweise wenn der charakteristische Wert eine Angabe über einen bisher unbekannten Kunststoffvorformling oder eine unbekannte fertige Flaschenform darstellt. In einem solchen Fall bieten die gespeicherten Referenz-Parameterwerte unter Umständen nicht genügend Informationen, wie W exakt erreicht werden kann bzw. wie W sicher erreicht werden. In diesem Fall soll eine Optimierung erfolgen, damit W voraussichtlich möglichst gut getroffen wird.

Möchte beispielsweise ein Kunde neue Kunststoffvorformlinge verwenden, muss er nicht die exakten Prozessparameter einstellen, sondern lediglich charakteristische Werte des Kunststoffvorformlings. Zusätzlich können ggf. weitere Prozessparameter fest vorgegeben werden, wie beispielsweise eine gemessene Umgebungstemperatur, eine Flaschentemperatur, etc.

Auf Basis von gespeicherten Referenz-Parameterwerten, die beispielsweise bei einer Vielzahl anderer, verschiedener Kunststoffvorformlinge gemessen worden sind, können die eingegeben Daten mit den existierenden Mustern verglichen und ein hochwahrscheinlich zutreffender Vorschlag für geeignete Prozessparameter abgegeben werden.

Bevorzugt erfolgt eine Selbstregulierung des Prozesses auf Basis von Flaschendaten. Vorteilhaft wird eine künstliche Intelligenz genutzt. Vorteilhaft kommt hier ein Data-Mining-Ansatz zum Einsatz. Hierbei können beispielsweise Cluster-, Korrelations- und Regressionsanalysen zur Untersuchung der Daten auf Zusammenhänge genutzt werden. Vorteilhaft kann auch ein Deep-Learning-Ansatz zum Erlernen gültiger Kombinationen genutzt werden. Insbesondere kann ein Künstliches Neuronales Netz genutzt werden. Zur Berechnung von geeigneten Kombinationen können heuristische Methoden Anwendung finden.

Bevorzugt wird bei der Berechnung auf eine Datenbank bzw. ein Archiv der Speichereinrichtung zugegriffen, in dem gültige Kombinationen von Parameterwerten gespeichert sind. Beispielsweise kann eine Datenbank mit gültigen Kombinationen von Heizparametern und Sortenvariablen existieren, die für einen Data-Mining-Ansatz genutzt werden können, um Regeln für eine automatische Optimierung abzuleiten.

Bei einem vorteilhaften Verfahren wird die berechnete Kombination aus Parameterwerten (p₁ₓ, p₂ₓ, p₃ₓ, ... pₘₓ) gemeinsam mit dem charakteristischen Wert in der Speichereinrichtung gespeichert. Vorteilhaft werden diese berechneten und gespeicherten Parameterwerte bei zukünftigen Berechnungen als Referenz-Parameterwerte berücksichtigt.

Um einen Datenstamm zu erweitern und somit noch präzisere Berechnungen zu ermöglichen, werden neu berechnete Kombinationen aus Parameterwerten gemeinsam mit dem dazugehörigen charakteristischen Wert W abgespeichert. Berechnet beispielsweise eine Kunde ein neues Rezept für neue Kunststoffvorformlinge, wird dieses neue Rezept mit Angaben über diese neuen Kunststoffvorformlinge in der Speichereinrichtung gespeichert. Auf diese Weise kann später einerseits auf dieses exakte Rezept zurückgegriffen werden. Dies ist möglicherweise über eine Cloud auch anderen Kunden möglich. Andererseits kann dieses neue Rezept bei weiteren Berechnungen für die nächste Sorte an Kunststoffvorformlingen mitberücksichtigt werden. Auf diese Weise werden unter Umständen noch präzisere Berechnungen ermöglicht, als dies nur dem den bereits anfangs gespeicherten Referenz-Parameterwerten der Fall wäre.

Bei einem vorteilhaften Verfahren ist es auch möglich, über eine Benutzerschnittstelle die berechneten Parameterwerte zu verändern. Dies ist beispielsweise dann hilfreich, wenn sich die berechnete Kombination an Parameterwerten als nicht vollständig optimal darstellt. In einem solchen Fall können die Parameterwerte bevorzugt manuell geändert werden.

Bevorzugt können auch manuell geänderte Parameterwerte in der Speichereinrichtung gespeichert werden. Vorteilhaft können auch diese manuell geänderten Parameterwerte bei neuen Berechnungen als Referenz-Parameterwerte berücksichtigt werden.

Vorteilhaft ist es daher möglich, dass Rezepte und Parameter von Behältnisbehandlungsanlagen im Auslieferungszustand in der Speichereinrichtung gespeichert sind und diese Rezepte und Parameter im Fall von Änderungen durch einen Kunden geändert werden können. Bevorzugt werden die vom Kunden geänderten Parameter zusätzlich in der Speichereinrichtung abgelegt. Es wäre jedoch auch möglich, dass bereits vorhandene Parameterwerte aktualisiert werden, d. h. insbesondere, dass die ursprünglichen Werte gelöscht und nur die neuen Werte gespeichert sind. Bevorzugt ist es möglich, dass in der Speichereinrichtung abgespeichert wird, ob es sich um "Original"-Parameterwerte handelt oder ob es sich um geänderte Parameterwerte handelt. Vorteilhaft ist es bei einer Berechnung von Parameterwerten möglich, dass "Original"-Parameterwerte auf andere Weise berücksichtigt werden als geänderte Parameterwerte.

Die vorliegende Erfindung ist weiterhin auf eine Behältnisbehandlungsanlage mit mindestens einer Vorrichtung zum Behandeln von Behältnissen gerichtet, wobei der Behältnisbehandlungsanlage eine Vielzahl von Parametern (P₁, P₂, P₃, ... Pₘ) zugeordnet sind, die für die Behandlung von Behältnissen in der Behältnisbehandlungsanlage charakteristisch sind, wobei die Parameter (P₁, P₂, P₃, ... Pₘ) variabel sind und mit mindestens einem für die zu behandelnden Behältnisse charakteristische Wert (W) verknüpft sind, wobei die Behältnisbehandlungsanlage mit einer Speichereinrichtung verbindbar ist, in der für jeden Parameter (P₁, P₂, P₃, ... Pₘ) eine Vielzahl von Referenz-Parameterwerten (p₁₁, p₁₂, p₁₃... p₁ₙ, ... pₘ₁, pₘ₂, pₘ₃... pₘₙ) gespeichert ist.

Erfindungsgemäß ist der Behältnisbehandlungsanlage eine Benutzerschnittstelle zugeordnet, an der mindestens ein für die zu behandelnden Behältnisse charakteristischer Wert (W) eingebbar ist, wobei auf Basis dieser Eingabe und den gespeicherten Referenz-Parameterwerten (p₁₁, p₁₂, p₁₃... p₁ₙ, ... pₘ₁, pₘ₂, pₘ₃... pₘₙ) eine Kombination aus Parameterwerten (p₁ₓ, p₂ₓ, p₃ₓ, ... pₘₓ) für wenigstens zwei der Parameter (P₁, P₂, P₃, ... Pₘ) berechenbar ist.

Dabei ist diese beschriebene Vorrichtung insbesondere dazu eingerichtet und dafür vorgesehen, dass oben beschriebene Verfahren durchzuführen, d.h., dass alle für das obig beschriebene Verfahren ausgeführten Merkmale ebenso für die hier beschriebene Behältnisbehandlungsanlage offenbart sind und umgekehrt.

Vorteilhaft kann es sich bei der Verbindung zwischen Behältnisbehandlungsanlage und Speichereinrichtung um eine dauerhafte Verbindung handeln. Es ist jedoch auch denkbar, dass es sich lediglich um eine vorübergehende Verbindung handelt. Diese Verbindung kann beispielsweise nur zur Berechnung der Parameterwertkombinationen bestehen.

Bei der Verbindung kann es sich um eine drahtgebundene, insbesondere jedoch auch eine drahtlose Verbindung handeln.

Vorteilhaft kann die Speichereinrichtung mit mehreren Behältnisbehandlungsanlagen verbunden sein. Besonders bevorzugt kann die Speichereinrichtung mit Behältnisbehandlungsanlagen an verschiedenen Standorten verbunden sein. Bevorzugt kann es sich um eine Cloud-Speichereinrichtung handeln.

Bevorzugt ist die Behältnisbehandlungsanlage mit einer Recheneinheit verbunden, welche die Berechnung der Kombination aus Parameterwerten durchführt. Diese Recheneinheit kann lokal mit der Behältnisbehandlungsanlage verbunden sein. Bevorzugt ist die Recheneinheit jedoch drahtlos mit der Behältnisbehandlungsanlage verbunden. Besonders bevorzugt ist eine zentrale Recheneinheit mit mehreren Behältnisbehandlungsanlagen verbunden.

Bei einer vorteilhaften Ausführungsform weist die Behältnisbehandlungsanlage mindestens eine Sensorvorrichtung auf. Bevorzugt weist die Behältnisbehandlungsanlage eine Vielzahl von Sensorvorrichtungen auf. Vorteilhaft können mittels der mindestens einen Sensorvorrichtung für mindestens einen Parameter Parameterwerte aufgenommen werden.

Bevorzugt können mittels der mindestens einen Sensorvorrichtung Parameterwerte aufgenommen werden, die als Referenz-Parameterwerte dienen können. Vorteilhaft kann mit der mindestens einen Sensorvorrichtung während der Behandlung ein Parameter-Istwert aufgenommen werden. Vorteilhaft können mit der mindestens einen Sensorvorrichtung für einen Parameter sowohl Referenz-Parameterwerte als auch ein Parameter-Istwert aufgenommen werden. Bevorzugt kann ein von einer Sensorvorrichtung gemessener Parameter-Istwert in der Speichereinrichtung abgespeichert werden und besonders bevorzugt kann dieser abgespeicherte Parameter-Istwert in einer nächsten Berechnung als Referenz-Parameterwert dienen.

Bei einer vorteilhaften Ausführungsform kann es sich bei den Sensorvorrichtungen u.a. um Kameras, Lichtschranken, Bewegungssensoren, Temperatursensoren, Drucksensoren, Standortsensoren und/oder andere zur Erfüllung von Überwachungsaufgaben geeignete Sensoren bzw. Sensorvorrichtungen handeln.

Bei einer bevorzugten Ausführungsform handelt es sich bei der Behältnisbehandlungsanlage um Heizanlagen, welche Vorformlinge erhitzen, Umformeinrichtungen, insbesondere Blasformmaschinen, welche Kunststoffvorformlinge in Kunststoffbehältnisse umformen, Etikettieraggregate, Füllmaschinen, Sterilisationseinheiten oder dergleichen. Vorteilhaft kann es sich auch um eine Kombination dieser Anlagen handeln.

Vorteilhaft kann eine Heizanlage mehrere Heizelemente aufweisen. Bevorzugt werden die Kunststoffvorformlinge mittels einer Transporteinrichtung durch die Heizanlage geführt und dabei mit einer Vielzahl von Heizelementen erwärmt. Vorteilhaft sind die Heizelemente entlang der Transportstrecke hintereinander angeordnet. Vorteilhaft kann ein Heizelement mehrere Heizstrahler aufweisen. Diese Heizstrahler sind bevorzugt in einer Reihe übereinander, also in Längsrichtung der Kunststoffvorformlinge, angeordnet. Bei den Heizstrahlern kann es sich insbesondere um Infrarot-Heizstrahler handeln. Vorteilhaft kann jeder Heizstrahler ein länglicher Strahler sein (Infrarot-Röhre), dessen Länge sich in Transportrichtung der Kunststoffvorformlinge erstreckt. Vorteilhaft sind die einzelnen Heizstrahler getrennt regelbar. Bevorzugt kann die Temperatur jedes Heizstrahlers unabhängig eingestellt werden. Vorteilhaft sind die Heizstrahler in Richtung der Kunststoffvorformlinge bewegbar. Bevorzugt weist die Heizanlage einen Stellmechanismus auf, mit dem ein Heizelement in Richtung der Kunststoffvorformlinge zustellbar ist. Dabei können bevorzugt die Heizelemente unabhängig voneinander bewegt werden.

Vorteilhaft kann die Behältnisbehandlungsanlage eine Vorrichtung zum Umformen von Kunststoffvorformlingen zu Kunststoffbehältnissen sein bzw. eine solche Vorrichtung aufweisen. Bei der Vorrichtung zum Umformen von Kunststoffvorformlingen zu Kunststoffbehältnissen handelt es sich bevorzugt um eine Blasformeinrichtung bzw. eine Blasstation. Bei einer vorteilhaften Ausführungsform ist eine Vielzahl derartiger Blasformeinrichtungen an einem gemeinsamen beweglichen Träger angeordnet. Bei diesem Träger handelt es sich dabei insbesondere um einen drehbaren Träger. Vorteilhaft ist eine Vielzahl derartige Blasformanordnungen innerhalb einer Blasmaschine und besonders bevorzugt innerhalb einer Streckblasmaschine angeordnet. Dies bedeutet, dass die Kunststoffvorformlinge durch Beaufschlagung mit Druckluft zu den Kunststoffbehältnissen expandiert werden. Dazu weist die Vorrichtung bevorzugt eine Blasdüse auf, welche an eine Mündung der Kunststoffvorformlinge anlegbar ist, um die Kunststoffvorformlinge so mit Blasluft zu beaufschlagen bzw. mittels Blasluft zu expandieren. Daneben ist bevorzugt auch eine Ventilanordnung vorgesehen, welche die Zuführung der Blasluft an die Kunststoffvorformlinge steuert.

Bei einer weiteren vorteilhaften Ausführungsform weisen die Blasformeinrichtungen bzw. die Blasstationen jeweils Reckstangen auf, welche die Kunststoffvorformlinge in ihrer Längsrichtung dehnen. Besonders bevorzugt ist die Blasmaschine bzw. sind der Träger und die Blasformanordnungen innerhalb eines Reinraums angeordnet, welcher die Blasformmaschine gegenüber einer unsterilen Umgebung abgrenzt. Antriebseinrichtungen für die Verschließung, Verriegelung und/oder Öffnung der Blasformen befinden sich dabei bevorzugt außerhalb des Reinraums angeordnet.

Die Blasformeinrichtungen werden dabei bevorzugt innerhalb des Reinraums transportiert, wobei der Reinraum bevorzugt von mehreren Wandungen begrenzt wird. Bevorzugt wird der Reinraum dabei von wenigstens einer stehenden Wandung und einer sich gegenüber dieser stehenden Wandung bewegenden Wandung begrenzt. Dabei kann beispielsweise der Träger, an dem die Blasformen angeordnet sind, bereits eine dieser Wandungen und insbesondere die sich bewegende Wandung aufweisen bzw. ausbilden. Der Reinraum grenzt die Blasformen dabei insbesondere von einer unsterilen Umgebung ab.

Weitere Vorteile und Ausführungsformen ergeben sich aus den beigefügten Zeichnungen:
Darin zeigen:
- Fig. 1: typische Behältnisbehandlungsanlagen nach dem Stand der Technik;
- Fig. 2: eine schematische Darstellung eines erfindungsgemäßen Verfahrens;
- Fig. 3: eine schematische Darstellung eines vorteilhaften Verfahrens zum Reagieren auf Prozessschwankungen;
- Fig. 4: eine schematische Darstellung eines vorteilhaften Verfahrens zur Optimierung von Parametern;
- Fig. 5: eine schematische Darstellung eines vorteilhaften Verfahrens zum Einrichten neuer Behältnissorten.

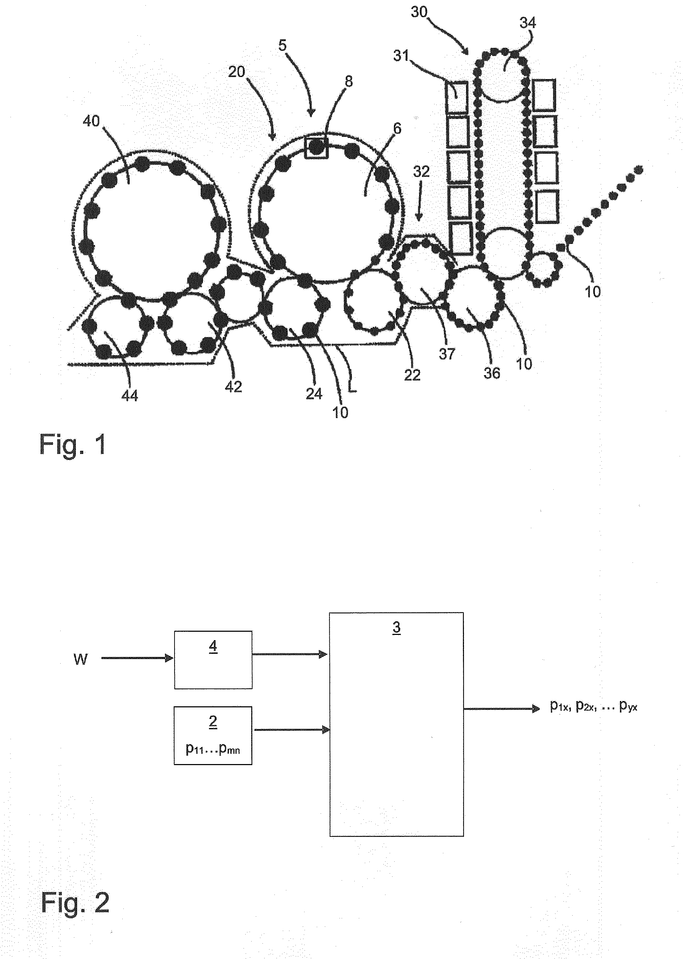

Fig. 1 zeigt typische Behältnisbehandlungsanlagen und ihre typische Anordnung zueinander. Als Behältnisbehandlungsanlage wird hierbei sowohl die Gesamtanlage bezeichnet als auch die einzelnen Behältnisbehandlungsanlagen wie Ofen, Umformungsvorrichtungen etc. Fig. 1 zeigt eine Heizeinrichtung 30, in der Kunststoffvorformlinge 10 erwärmt werden. Dabei werden diese Kunststoffvorformlinge 10 mittels einer Transporteinrichtung 34, wie hier einer umlaufenden Kette, durch diese Heizeinrichtung 30 geführt und dabei mit einer Vielzahl von Heizelementen 31 erwärmt. An diese Heizeinrichtung 30 schließt sich eine Übergabeeinheit 36 an, welche die Vorformlinge 10 an eine Sterilisationseinrichtung 32 übergibt. Diese Sterilisationseinrichtung 32 weist dabei hier ebenfalls ein Transportrad 37 auf und an diesem Transportrad 37 oder auch stationär können Sterilisationselemente angeordnet sein. In diesem Bereich ist beispielsweise eine Sterilisation durch Wasserstoffperoxidgas oder auch durch elektromagnetische Strahlung möglich. Insbesondere wird in diesem Bereich eine Innensterilisation der Vorformlinge durchgeführt.

Das Bezugszeichen 20 bezeichnet in seiner Gesamtheit einen Reinraum, dessen Außenbegrenzungen hier durch die punktierte Linie L angedeutet sind.

Das Bezugszeichen 5 bezeichnet in ihrer Gesamtheit eine Umformungsvorrichtung, bei der an einem Transportrad 6 eine Vielzahl von Blasstationen bzw. Umformungsstationen 8 angeordnet ist, wobei hier lediglich einer dieser Blasstationen 8 dargestellt ist. Mit diesen Blasstationen 8 werden die Kunststoffvorformlinge 10 zu Behältnissen 10 expandiert. Obwohl hier nicht detailliert gezeigt, befindet sich nicht der gesamte Bereich der Transporteinrichtung 6 innerhalb des Reinraums 20. So wäre es möglich, dass der Reinraum zumindest im Bereich der Umformungsvorrichtung 1 kanalartig ausgeführt ist.

Das Bezugszeichen 22 bezieht sich auf eine Zuführeinrichtung, welche die Vorformlinge an die Umformungseinrichtung 5 übergibt und das Bezugszeichen 24 auf eine Abführeinrichtung, welche die hergestellten Kunststoffbehältnisse 10 von der Umformungsvorrichtung 5 abführt.

Mit einer Übergabeeinheit 42 werden die expandierten Kunststoffbehältnisse an eine Befüllungseinrichtung 40 übergeben und von dieser Befüllungseinrichtung 40 anschließend über eine weitere Transporteinheit 44 abgeführt.

Fig. 2 zeigt schematisch ein erfindungsgemäßes Verfahren. Der Recheneinheit 3 wird über eine Benutzerschnittstelle 4 ein für ein zu behandelndes Behältnis charakteristischer Wert W übergeben. In der Speichereinheit 2 sind für die Parameter (P₁, P₂, P₃, ... Pₘ) eine Vielzahl von Referenz-Parameterwerten (p₁₁, p₁₂, p₁₃, ... p₁ₙ, ... pₘ₁, pₘ₂, pₘ₃, ... pₘₙ) gespeichert. Auf Basis dieser Referenz-Parameterwerten und der Benutzereingabe berechnet die Rechnereinheit 3 eine Kombination aus Parameterwerten (p₁ₓ, p₂ₓ, p₃ₓ, ... p_{yx}) für wenigstens zwei der Parameter (Pi, P₂, P₃, ... Pₘ). Die Parameter können über eine Ausgabeeinheit ausgegeben werden.

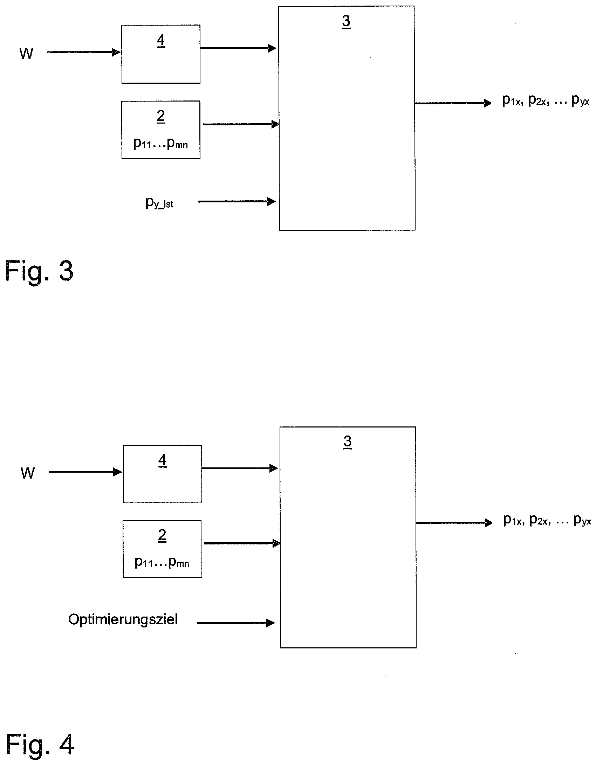

Bei Fig. 3 wird der Recheneinheit zusätzlich ein Parameter-Istwert p_{y_ist} übergeben, der bei der Berechnung der Kombination aus Parameterwerten (p₁ₓ, p₂ₓ, p₃ₓ, ... p_{yx}) berücksichtigt wird.

In Fig. 4 wird gezeigt, dass der Recheneinheit auch ein Optimierungsziel übergeben werden kann (beispielsweise, dass Parameter P₁ möglichst gering sein soll). In einem solchen Fall wird eine Kombination aus Parameterwerten (p₁ₓ, p₂ₓ, p₃ₓ, ... p_{yx}) berechnet, mit der dieses Optimierungsziel möglichst gut erreicht werden kann.

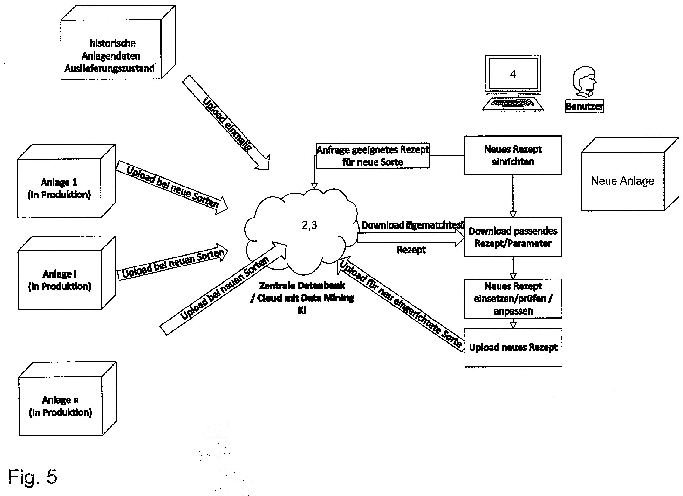

Fig. 5 zeigt eine schematische Darstellung eines vorteilhaften Verfahrens zum Einrichten neuer Behältnissorten. Die Vielzahl von Referenz-Parameterwerten (p₁₁, p₁₂, p₁₃... p₁ₙ, ... pₘ₁, pₘ₂, pₘ₃,... pₘₙ) sind dabei in einer Speichereinrichtung 2 (Zentrale Datenbank / Cloud) gespeichert. Hierzu können einerseits historische Anlagendaten, wie diese im Auslieferzustand voreingestellt sind, einmalig in die Speichereinrichtung geladen werden. Zusätzlich können die einzelnen Anlagen (möglich auch für mehrere Anlagen 1 bis n) weitere Referenz-Parameterwerte in die Speichereinrichtung laden. Dies ist insbesondere dann vorteilhaft, wenn in einer Anlage neue Sorten behandelt werden. Möchte ein Benutzer (beispielsweise in einer neuen Anlage) eine neue Behältnissorte einrichten, kann er über eine Benutzerschnittstelle 4 eine Anfrage nach einem geeigneten "Rezept" (also einer Kombination aus Parameterwerten) für die neue Sorte bei der Speichereinrichtung 2 stellen.

Mithilfe einer Recheneinheit 3 wird eine geeignete Kombination aus Parameterwerten berechnet. Dieses "gematchte" Rezept kann aus der zentralen Datenbank/Cloud heruntergeladen und in der Anlage zur Verfügung gestellt werden.

Dieses neue Rezept kann in der Anlage anschließend überprüft werden. Soweit sich die berechneten Parameterwerte in der Praxis als nicht völlig optimal herausstellen, können diese manuell angepasst werden. Das überprüfte und ggf. manuell geänderte Rezept kann anschließend in die Zentrale Datenbank / Cloud geladen werden, so dass dort weitere Referenz-Parameterwerte zur Verfügung stehen.

### Bezugszeichenliste

- 1: Behältnisbehandlungsanlage
- 2: Speichereinrichtung
- 3: Recheneinheit
- 4: Benutzerschnittstelle
- 5: Umformungsvorrichtung
- 6: Transportrad
- 8: Umformungsstationen
- 10: Behältnisse
- 20: Reinraum
- 22: Zuführeinrichtung
- 24: Abführeinrichtung
- 30: Heizeinrichtung
- 31: Heizelemente
- 32: Sterilisationseinrichtung
- 34: Transporteinrichtung
- 36: Übergabeeinheit
- 37: Transportrad
- 40: Befüllungseinrichtung
- 42: Übergabeeinheit
- 44: Transporteinheit
- L: Linie (Reinraum)
- P₁...: Parameter
- P₁₁...: Parameterwert
- p_{y_Ist}: Parameter-Istwert

## Patentansprüche

1. Verfahren zum Betreiben einer Behältnisbehandlungsanlage (1), wobei eine Vielzahl von Parametern (P₁, P₂, P₃, ... Pₘ) der Behältnisbehandlungsanlage (1), die für die Behandlung von Behältnissen (10) in der Behältnisbehandlungsanlage (1) charakteristisch sind, variabel sind und wobei die Parameter (P₁, P₂, P₃, ... Pₘ) jeweils mit mindestens einem für die zu behandelnden Behältnisse (10) charakteristischen Wert (W) verknüpft sind, wobei für jeden Parameter (P₁, P₂, P₃, ... Pₘ) eine Vielzahl von Referenz-Parameterwerten (p₁₁, p₁₂, p₁₃,... p₁ₙ, ... pₘ₁, pₘ₂, pₘ₃,... pₘₙ) in einer Speichereinrichtung (2) gespeichert sind,
**dadurch gekennzeichnet, dass**
an einer Benutzerschnittstelle (4) mindestens ein für die zu behandelnden Behältnisse (10) charakteristischer Wert (W) eingegeben wird und auf Basis dieser Eingabe und den gespeicherten Referenz-Parameterwerten (p₁₁, p₁₂, p₁₃, ... p₁ₙ, ... pₘ₁, pₘ₂, pₘ₃, ... pₘₙ) eine Kombination aus Parameterwerten (p₁ₓ, p₂ₓ, p₃ₓ, ... p_{yx}) für wenigstens zwei der Parameter (P₁, P₂, P₃, ... Pₘ) berechnet wird.

2. Verfahren nach Anspruch 1,
**dadurch gekennzeichnet, dass**
mindestens ein Parameter (P₁, P₂, P₃, ... Pₘ) in Abhängigkeit von der erfolgten Berechnung reguliert wird.

3. Verfahren nach zumindest einem der vorangegangenen Ansprüche,
**dadurch gekennzeichnet, dass**
während der Behandlung der Behältnisse (10) mindestens ein Parameter-Istwert (p_{y_ist}) eines Parameters (P_{y}) gemessen wird.

4. Verfahren nach dem vorangegangenen Anspruch,
**dadurch gekennzeichnet, dass**
die Kombination aus Parameterwerten (p₁ₓ, p₂ₓ, p₃ₓ, ... pₘₓ) auf Basis des an der Benutzerschnittstelle (4) eingegebenen charakteristischen Wertes (W) unter Berücksichtigung des Parameter-Istwerts (p_{y_ist}) als fest vorgegebener Parameterwert berechnet wird.

5. Verfahren nach zumindest einem der vorangegangenen Ansprüche,
**dadurch gekennzeichnet, dass**
bei der Berechnung der Kombination aus Parameterwerten (p₁ₓ, p₂ₓ, p₃ₓ, ... pₘₓ) eine Optimierung für mindestens einen Parameter (P₁, P₂, P₃, ... Pₘ) möglich ist.

6. Verfahren nach zumindest einem der vorangegangenen Ansprüche,
**dadurch gekennzeichnet, dass**
für mindestens einen Parameter (P₁, P₂, P₃, ... Pₘ) Ober- und/oder Untergrenzen für einen zu berechnenden Parameterwert (p₁ₓ, p₂ₓ, p₃ₓ, ... pₘₓ) vorgegeben sind.

7. Verfahren nach zumindest einem der vorangegangenen Ansprüche,
**dadurch gekennzeichnet, dass**
für den charakteristischen Wert (W) eine Fehlertoleranz vorgebbar ist.

8. Verfahren nach zumindest einem der vorangegangenen Ansprüche,
**dadurch gekennzeichnet, dass**
auf Basis der gespeicherten Referenz-Parameterwerten (p₁₁, p₁₂, p₁₃,... p₁ₙ, ... pₘ₁, pₘ₂, pₘ₃, ... pₘₙ) eine Kombination aus Parameterwerten (p₁ₓ, p₂ₓ, p₃ₓ, ... pₘₓ) berechnet wird, mit der der charakteristische Wert (W) möglichst genau getroffen wird.

9. Verfahren nach zumindest einem der vorangegangenen Ansprüche,
**dadurch gekennzeichnet, dass**
die berechnete Kombination aus Parameterwerten (p₁ₓ, p₂ₓ, p₃ₓ, ... pₘₓ) gemeinsam mit dem charakteristischen Wert (W) in der Speichereinrichtung (2) gespeichert wird.

10. Behältnisbehandlungsanlage (1) mit mindestens einer Vorrichtung (6) zum Behandeln von Behältnissen (10), wobei der Behältnisbehandlungsanlage (1) eine Vielzahl von Parametern (P₁, P₂, P₃, ... Pₘ) zugeordnet sind, die für die Behandlung von Behältnissen (10) in der Behältnisbehandlungsanlage (1) charakteristisch sind, wobei die Parameter (P₁, P₂, P₃, ... Pₘ) variabel sind und mit mindestens einem für die zu behandelnden Behältnisse (10) charakteristische Wert (W) verknüpft sind, wobei die Behältnisbehandlungsanlage (1) mit einer Speichereinrichtung (2) verbindbar ist, in der für jeden Parameter (P₁, P₂, P₃, ... Pₘ) eine Vielzahl von Referenz-Parameterwerten (p₁₁, p₁₂, p₁₃... p₁ₙ, ... pₘ₁, pₘ₂, pₘ₃,... pₘₙ) gespeichert ist,
**dadurch gekennzeichnet, dass**
der Behältnisbehandlungsanlage (1) eine Benutzerschnittstelle (4) zugeordnet ist, an der mindestens ein für die zu behandelnden Behältnisse (10) charakteristischer Wert (W) eingebbar ist, wobei auf Basis dieser Eingabe und den gespeicherten Referenz-Parameterwerten (p₁₁, p₁₂, p₁₃,... p₁ₙ, ... pₘ₁, pₘ₂, pₘ₃,... pₘₙ) eine Kombination aus Parameterwerten (p₁ₓ, p₂ₓ, p₃ₓ, ... pₘₓ) für wenigstens zwei der Parameter (P₁, P₂, P₃, ... Pₘ) berechenbar ist.
